# NEUE EUROPÄISCHE PATENTSCHRIFT

(11) **EP 1 320 418 B2**
(45) Veröffentlichungstag und Bekanntmachung des Hinweises auf die Entscheidung über den Einspruch: **19.12.2007**
(45) Hinweis auf die Patenterteilung: 28.07.2004
(21) Anmeldenummer: 01974145.3
(22) Anmeldetag: 08.08.2001
(51) Int. Cl.: B05C 3/10, B65G 49/04, B65G 49/02

(54) **Vorrichtung und Verfahren zur Oberfl§chenbehandlung von Werkst?cken**
Device and Method for the Surface Treatment of Workpieces
Dispositif et proc?d? de traitement de surface de piÌces

(30) Priorität: 27.09.2000 DE 10047968
(43) Veröffentlichungstag der Anmeldung: 25.06.2003
(73) Patentinhaber: ABB Technology FLB Aktiebolag, 113 96 Stockholm (SE)
(72) Erfinder: KREUZER, Bernd, 36341 Lauterbach-Maar (DE)
(74) Vertreter: HOFFMANN EITLE
(86) Internationale Anmeldenummer: PCT/EP2001/009188
(87) Internationale Veröffentlichungsnummer: WO 2002/026396

(56) Entgegenhaltungen:
- DE-A- 2 902 352
- DE-A- 19 641 048
- DE-A1- 4 033 333
- DE-A1- 19 706 175
- DE-C3- 2 902 352

## Beschreibung

### Technisches Gebiet

Die Erfindung betrifft eine Anlage zur Oberflächenbehandlung von Werkstücken wie beispielsweise Fahrzeugkarosserien. Eine derartige Anlage umfasst mehrere aufeinanderfolgende Behandlungsstationen sowie eine Führungseinrichtung, die einen im Bereich der Behandlungsstationen verlaufenden ersten Führungsabschnitt aufweist. Darauf sind spezielle Drehgestelle verfahrbar. Die Erfindung betrifft ferner ein Verfahren zur Durchführung einer Oberflächenbehandlung an Werkstücken, insbesondere Fahrzeugkarosserien.

### Stand der Technik

Bisher bekannte Vorrichtungen zur Oberflächenbehandlung von Werkstücken wie Fahrzeugkarosserien in beispielsweise Tauchbädern oder Behandlungskabinen lassen sich in kontinuierlich und nicht-kontinuierlich fördernde Vorrichtungen unterteilen. Bei kontinuierlich fördernden Anlagen werden die Karosserien beispielsweise in einem Gehänge befestigt. Die Gehänge werden in der Regel mit einem Kettenantrieb in die Tauchbäder abgesenkt, durch die Tauchbäder gezogen und wieder aus den Tauchbädern gehoben. Je nach gewünschter Prozesszeit und Kapazität der Anlage wird die Tauchbeckenlänge und die Fördergeschwindigkeit angepasst. Eine solche Anlage ist beispielsweise in der GB 1 434 348 beschrieben. Eine weitere kontinuierlich fördernde Vorrichtung ist beispielsweise aus der gattungsbildenden DE 196 41 048 A1 bekannt. Bei dieser Anlage werden mehrere Drehgestelle in festem Abstand zueinander mit gleichbleibender Geschwindigkeit mit Hilfe einer gemeinsamen Fördereinrichtung oberhalb mehrerer Behandlungsbecken verfahren. Bei sich fortbewegenden Drehgestellen mit darauf befindlichen Fahrzeugkarosserien erfolgt ein Ein- und Ausbringen der Fahrzeugkarosserien in bzw. aus den Behandlungsbecken durch eine Drehbewegung, die über ein Hebelsystem oder durch einen dafür vorgesehenen Motor bewirkt wird.

Bei den nicht-kontinuierlich fördernden Anlagen, auch Taktanlagen genannt, werden die Karosserien auf Objektträgern über die Tauchbecken gefahren und dort gestoppt. Durch Hebevorrichtungen wie beispielsweise Überhebanlagen oder Drehvorrichtungen werden die Karosserien in das Behandlungsbad eingetaucht und nach der Prozesszeit wieder herausgehoben bzw. herausgedreht. Als Beispiel hierfür wird die DE 43 04145 C1 genannt. Auch die GB 2 229 381 A ist dieser Kategorie von Anlagen zuzuordnen. Taktanlagen sind nur bei kleinen Produktionsraten einzusetzen, da die Anlagenkapazität von der gewünschten Prozesszeit abhängig und somit stark eingeschränkt ist.

### Darstellung der Erfindung

Der Erfindung liegt der Gedanke zugrunde, erstmals eine Kombination aus kontinuierlich und nicht-kontinuierlich fördernden Anlagen bereitzustellen. So ist erstmals eine Anlage geschaffen, bei der mehrere, auf einer gemeinsamen Führungseinrichtung individuell verfahrbare Drehgestelle mit jeweils einer Halterung für wenigstens ein Werkstück vorhanden sind. Die Drehgestelle weisen eine Drehachse auf, die so angeordnet ist, dass bei einer Drehung um diese Drehachse wenigstens ein in einer Halterung eines Drehgestells befindliches Werkstück in die Behandlungsstation eingebracht bzw. hieraus herausbefördert werden kann. Eine Behandlungsstation kann beispielsweise ein Tauchbecken mit einer Behandlungsflüssigkeit sein. Auch eine Kabine für die Durchführung eines Beschichtungsvorgangs wie beispielsweise eine Lackierung stellt eine Behandlungsstation im vorliegenden Sinne dar. Selbstverständlich ist unter dem Begriff Behandlungsstation auch jede andere Art von Kabine oder Bekken zu subsumieren, wenn hierin an einem Teil eines Werkstücks oder an dem gesamten Werkstück irgendeine Behandlung im weitesten Sinne vorgenommen wird. Beispielsweise kann eine Behandlung hier auch einen Waschvorgang umfassen. Allgemein wird hierzu auf den Stand derTechnikverwiesen, in dem verschiedene, einem Fachmann geläufige Behandlungsstationen beschrieben sind (wie Tauchphosphatierung, Vorbehandlung für eine Tauchlackierung, Tauchlackierung, Pulverbeschichtungsvorgänge, Nasslackbeschichtungen, Trocknungsvorgänge usw.)

Eine erfindungsgemäße Anlage erreicht im Gegensatz zu einer Überhebanlage oder einer nicht-kontinuierlich fördernden Anlage eine größere Kapazität. Beispielsweise können bei einer vergleichbaren Überhebanlage gemäß dem Stand der Technik anstatt maximal 24 Karosserien pro Stunde erfindungsgemäß bis zu 30 Karosserien pro Stunde behandelt werden, was eine Kapazitätssteigerung von bemerkenswerten 25% darstellt. Im Gegensatz zum Stand der Technik, wie einer Überhebanlage, ist hier die erforderliche Fördertechnik minimiert und es werden keine zusätzlichen Betriebsmittel wie Förderkäfige benötigt. Ferner ist es vorteilhaft, dass grundsätzlich keine drehbaren Teile in die Behandlungsstationen eingebracht werden, so dass auch die Verschmutzung von beweglichen Teilen äu-ßerst gering bleibt. Als größter Vorteil ist zu sehen, dass bei einer erfindungsgemäßen Anlage auch das Überfahren von Behandlungsstationen möglich ist, wodurch beispielsweise auch Aluminiumkarosserien und verzinkte Fahrzeugkarosserien im Mischbetrieb auf ein und derselben Prozesslinie behandelbar sind. Ferner ist es erstmals möglich, verschiedene Verfahrgeschwindigkeiten in den Behandlungsstationen vorzusehen, da erstmals individuell verfahrbare Drehgestelle vorhanden sind, d.h. jedes Drehgestell kann unabhängig von den anderen Drehgestellen bewegt werden. Überaus günstig ist es auch, dass beispielsweise nurein einziges leeres Drehgestell zu einer Zuführ- oder Beladestation zurückgeführt werden muss, was auch noch mit erheblich größerer Geschwindigkeit durchgeführt werden kann als bisher. Bisher mussten zwangsweise immer eine größere Anzahl von Einheiten leer zurückgefahren werden, was kosten- und wartungsintensiv ist.

Optimalerweise weist jedes Drehgestell einen eigenen Antrieb zum Verfahren des Drehgestells längs der Führungseinrichtung auf. Die hierfür notwendigen Betriebsmittel, vorzugsweise Strom, können aus einer entsprechenden Versorgungsschiene innerhalb oder im Bereich der Fördereinrichtung bezogen werden. Es wäre allerdings auch denkbar, eine Art Linearantrieb vorzusehen, der eine individuelle Ansteuerung der einzelnen Drehgestelle erlaubt. Alternativ wäre es denkbar, ein umlaufendes Seil oder eine umlaufende Kette vorzusehen, an das die einzelnen Drehgestelle an- und abkoppelbar sind.

Denkbar wäre auch, dass jedes Drehgestell elnen eigenen Energiespeicher mit sich führt, beispielsweise eine Batterie, einen Druckluftspeicher oder einen Schwungradspeicher. In diesem Fall würde das Drehgestell die Energie für einen oder mehrere Umläufe mit sich führen. Der Energiespeicher könnte beim Rücklauf der Drehgestelle wieder aufgeladen werden.

Wie beim eingangs genannten Stand der Technik ist es auch hier möglich, die Drehung um die Drehachse durch ein Hebelsystem zu bewirken. Es wird allerdings zum Bewirken der Drehung bevorzugt, auf jedem Drehgestell einen eigenen Drehantrieb vorzusehen, wie beispielsweise einen Elektromotor.

Eine äußerst kostengünstige und vorteilhafte Ausführungsform umfasst einen gemeinsamen Antrieb zur Fortbewegung des Drehgestells wie auch zur Durchführung der Drehung. Je nach Schaltung eines Getriebes erfolgt über diesen Antrieb, vorzugsweise ein Elektromotor, die Drehbewegung oder die Fortbewegung des Drehgestells längs der Führungseinrichtung.

Eine äußerst einfache und kostengünstige Variante sieht vor, dass die Führungseinrichtung sich aus zwei Abschnitten zusammensetzt: einen ersten Führungsabschnitt, der entlang der Behandlungsstationen verläuft und einen zweiten Führungsabschnitt, der mit dem ersten Abschnitt eine Rückführung der Drehgestelle zulässt und eine geschlossene Schleife bildet. Selbstverständlich ist es auch möglich, diese zwei Abschnitte voneinander zu trennen und die Drehgestelle durch geeignete Überführungseinrichtungen von dem einen Abschnitt zu dem anderen zu verfahren.

Die Führungseinrichtung kann verschiedenste Ausgestaltungen haben. Optimalerweise und auch im Hinblick auf die Kosten äußerst günstig ist die Führungseinrichtung als ein- oder mehrteilige Schiene ausgebildet. So können zwei sich gegenüberliegende Schienen die Führungseinrichtung bilden. Es kann aber auch nur eine Einschienenführungsbahn vorgesehen sein.

Eine Kombination einer erfindungsgemäßen Anlage mit einer Zuführ- oder Beladevorrichtung und einer Entladevorrichtung wird bevorzugt. Die Beladevorrichtung ist in bekannter Weise so ausgebildet, dass die Werkstücke auf eine Halterung eines Drehgestells aufbringbar sind. Die Entladevorrichtung ist dergestalt ausgebildet, dass behandelte Werkstücke aus den Halterungen der Drehgestelle abnehmbar sind und zu anderen Fördereinrichtungen oder Behandlungsstationen geführt werden können.

In optimaler Weise verläuft der zweite Führungsabschnitt der Führungseinrichtung zur Rückführung der Drehgestelle von einem Entladebereich zu einem Beladebereich der Anlage oberhalb der Behandlungsstation. Dadurch wird seitlich Platz eingespart. Darüber hinaus ist es hierdurch auch möglich, bereits vorhandene Fördereinrichtungen wie Schienen mit der neuen Technologie zu koppeln. Selbstverständlich ist es aber in Abhängigkeit der örtlichen Gegebenheiten auch möglich, den Rückführungsabschnitt unterhalb oder seitlich der Behandlungsstationen zu führen.

Zur Verkürzung der Gesamtanlage sind die Drehachsen der Drehgestelle vorzugsweise parallel zur Verfahrrichtung der Drehgestelle angeordnet. Die größte Abmessung der Werkstücke ist dabei vorzugsweise senkrecht zu den Drehachsen ausgerichtet. Das Ein- und Ausdrehen der Werkstücke erfolgt dabei senkrecht zur Längserstreckung der Führungseinrichtung. Ebenso Ist es möglich, die Drehachsen senkrecht zur Verfahrrichtung der Drehgestelle anzuordnen.

Die Erfindung betrifft ferner ein Verfahren zur Durchführung einer Oberflächenbehandlung an Werkstücken wie beispielsweise Fahrzeugkarosserien. Erfindungsgemäß werden auf einer Führungseinrichtung verfahrbare Drehgestelle mit jeweils einer Halterung für wenigstens ein Werkstück und einer Drehachse unabhängig voneinander in eine gewünschte Position zu mehreren aufeinanderfolgenden Behandlungsstationen verfahren. In der jeweiligen Position oderauch während des Verfahrens der Drehgestelle erfolgt ein Drehen um die Drehachse eines Drehgestells, wodurch ein oder mehrere Werkstücke in eine Behandlungsstation eingebracht bzw. aus dieser herausbefördert werden.

Durch unterschiedliche Verfahrgeschwindigkeiten der einzelnen Drehgestelle lassen sich unterschiedliche Verweilzeiten in den Behandlungsstationen erreichen. Ferner ist auch das Rückführen mit erhöhter Geschwindigkeit möglich, so dass sehr schnell wieder ein leeres Drehgestell mit einem neuen Werkstück beladen werden kann. Das individuelle Verfahren der Drehgestelle erfolgt vorteilhafterweise durch Eigenantrieb; wie es bereits zuvor eingehend erläutert wurde.

Optimalerweise werden bei der Rückführung der Drehgestelle zu einer Beladevorrichtung die Drehgestelle mit den Halterungen so gestellt, dass möglichst seitlich wenig Platz eingenommen wird. Bei einer Rückführung der Drehgestelle oberhalb der Behandlungsstationen kann beispielsweise eine um etwa 90° verdrehte Halterung zweckmäßig sein.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben. Es zeigt:
- Fig. 1: eine Perspektivansicht einer erfindungsgemäßen Anlage von schräg oben,
- Fig.2: eine weitere Perspektivansicht einer erfindungsgemäßen Anlage von schräg vorne,
- Fig. 3: eine weitere Perspektivansicht eines Details einer erfindungsgemäßen Anlage gemäß Fig. 1,
- Fig. 4: eine weitere Perspektivansicht des Details der erfindungsgemäßen Anlage gemäß Fig. 3 von der anderen Seite,
- Fig.5: eine schematisierte Längsschnittansicht durch eine Ausführungsform einer erfindungsgemäßen Anlage, und
- Fig.6: eine schematisierte Querschnittsansicht durch eine Ausführungsform einer erfindungsgemäßen Anlage gemäß Fig. 2.

### Beschreibung einer bevorzugten Ausführungsform der Erfindung

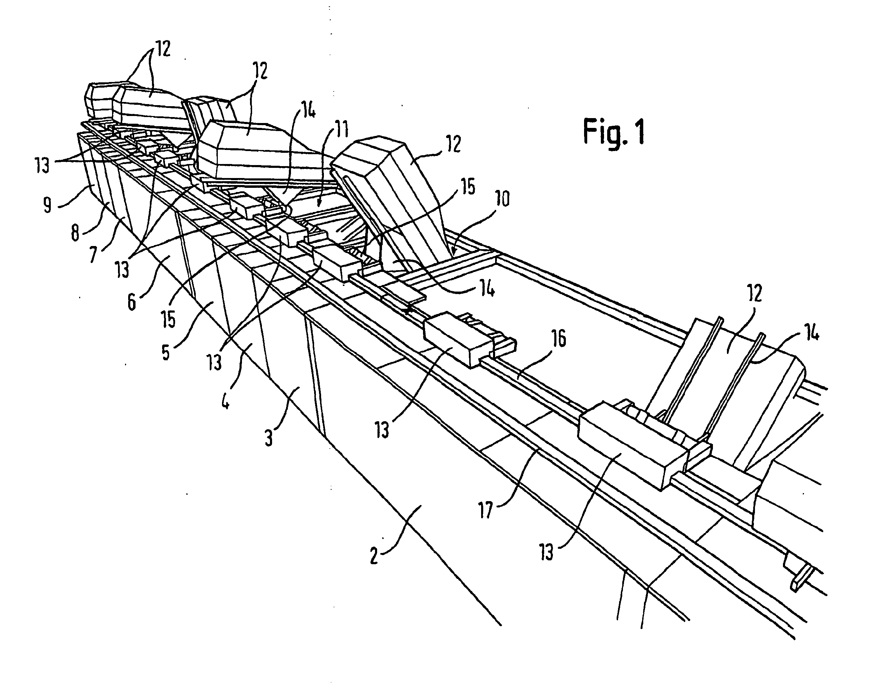

Anhand der Fig. 1 bis 6 wird eine Ausführungsform einer erfindungsgemäßen Anlage zur Oberflächenbehandlung von Fahrzeugkarosserien beschrieben. Wie aus den verschiedenen perspektivischen Ansichten gemäß den Fig. 1 bis 4 ersichtlich ist, sind mehrere Behandlungsstationen 1-9 (auch Behandlungsbekken 1 - 9 genannt) hintereinander angeordnet. Hier sind die Behandlungsbecken 1 - 9 mit verschiedenen Behandlungsflüssigkeiten gefüllt. So wird beispielsweise in einem Behandlungsbecken eine Tauchlackierung durchgeführt, in den anderen Becken sind spezielle, an sich bekannte Behandlungsflüssigkeiten zur Vor- bzw. Nachbehandlung enthalten. Oberhalb der Behandlungsbecken 1 - 9 erstreckt sich ein erster Führungsabschnitt 16 einer Führungseinrichtung. Parallel hierzu verläuft randseitig der Behandlungsbecken 1-9 ein zweiter Führungsabschnitt 17, der zusammen mit dem ersten Abschnitt 16 der Führungseinrichtung eine geschlossene Schleife bildet. Die geschlossene Schleife ist insbesondere aus der Fig. 1 ersichtlich.

Hier bestehen die Führungsabschnitte 16 und 17 aus einer Führungsschiene, auf der mehrere Drehgestelle 13 verfahrbar geführt sind. Jedes Drehgestell 13 umfasst eine Halterung 14, die um eine Drehachse 15 gegenüber dem Drehgestell 13 verdrehbar ist. Die Drehachsen 15 der Drehgestelle 13 sind in dem gezeigten Ausführungsbeispiel parallel zu den Führungsabschnitten 16, 17 der Führungseinrichtung ausgerichtet. Auf den Halterungen 14 sind direkt oder unter Zwischenschaltung sogenannter Skids mittelbar Fahrzeugkarosserien 12 lösbar befestigt. In dem gezeigten Ausführungsbeispiel ist jeweils eine Karosserie 12 auf einem Drehgestell 13 befestigt. Es können aber auch selbstverständlich mehrere Karosserien 12 nebeneinander oder hintereinander auf einem einzigen Drehgestell 13 angebracht sein.

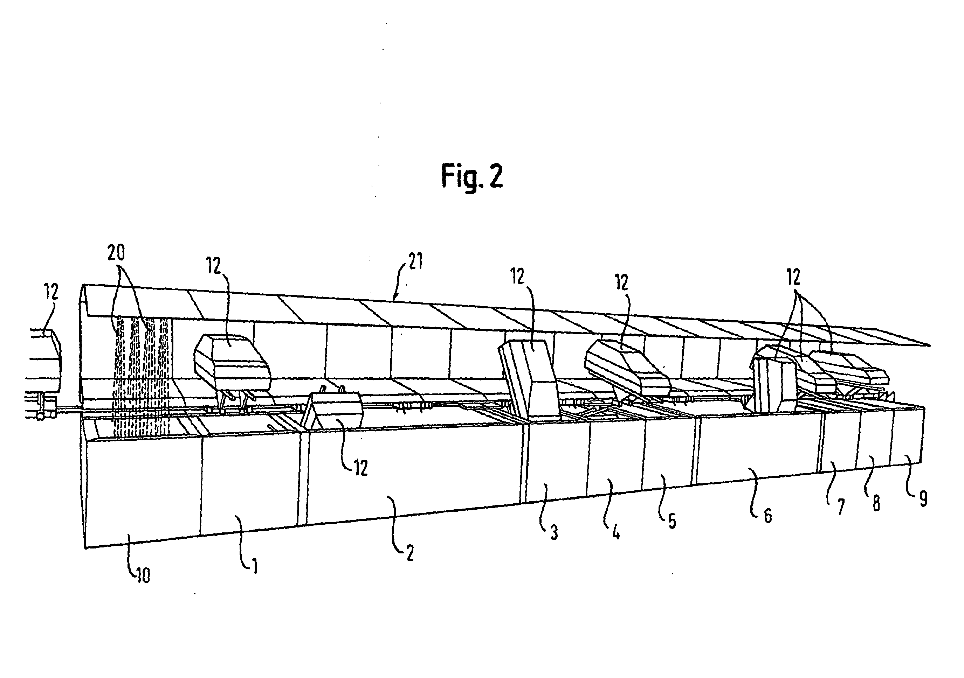

Gemäß der Darstellung der Fig. 2 ist am Anfang der Behandlungsstationen bzw. Behandlungsbekken 1 - 9 eine erste Behandlungsstation 10 vorhanden, in der Reinigungswasser 20 von oben über die behandelten Fahrzeugkarosserien 12 auf den Drehgestellen 13 gespritzt werden kann, um die noch zu behandelnden Karosserien 12 von aus vorhergehenden Bearbeitungsschritten stammenden Verschmutzungen zu reinigen.

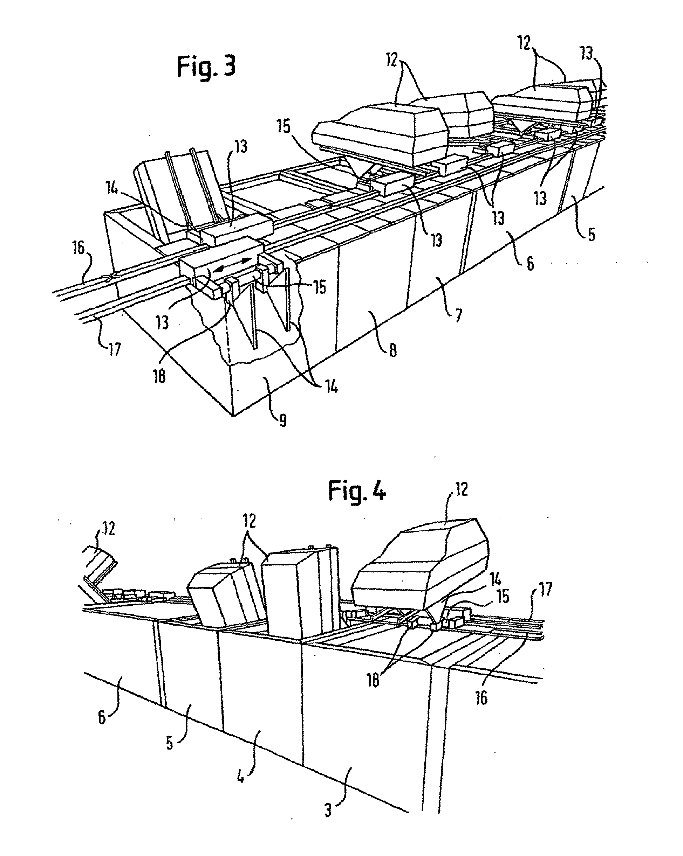

Wie aus der Darstellung gemäß Fig. 3 ersichtlich ist, ist ein verfahrbares Drehgestell 13 mit zwei Vorsprüngen ausgestattet, an deren Enden eine Drehachse 15 gelagert ist. An der Drehachse sind Abklapparme 18 drehfest angebracht, über die die Halterung 14 für Fahrzeugkarosserien am Drehgestell 13 befestigt sind. Auf den Halterungen 14 werden über hier nicht gezeigte Befestigungseinrichtungen die Fahrzeugkarosserien 12 lösbar an den Drehgestellen 13 angebracht.

Gemäß den verschiedenen Perspektivansichten ist ersichtlich, dass durch eine 180°-Drehung um die Drehachse 15 eine Fahrzeugkarosserie 12 in eine Behandlungsflüssigkeit in einem Behandlungsbecken 1 - 9 eingetaucht werden kann bzw. durch entgegengesetzte Drehung wieder aus diesem Behandlungsbecken 1-9 herausgeführt werden kann.

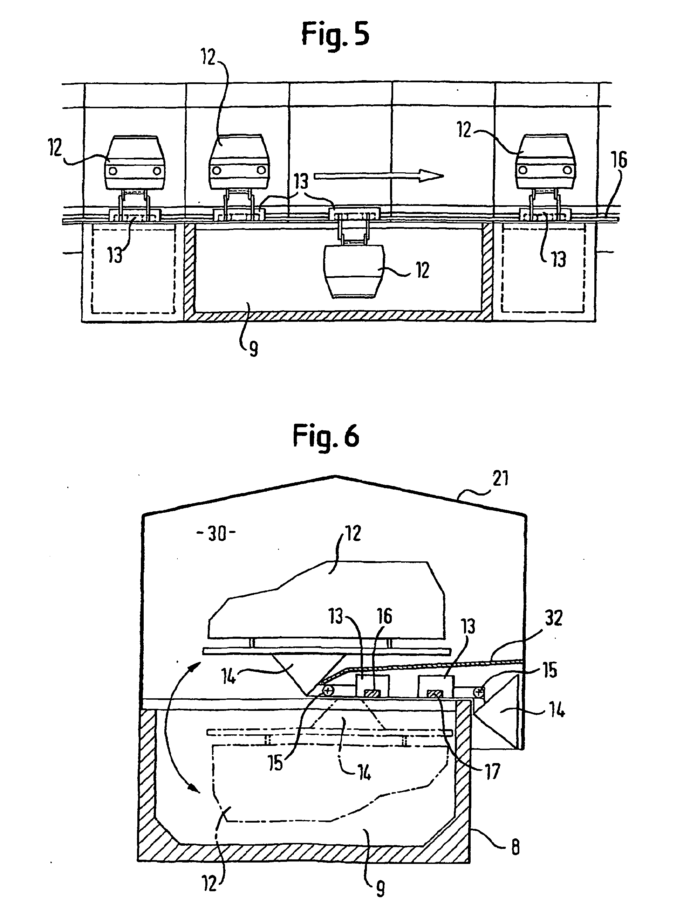

Aus der Darstellung der Fig. 2 wie auch der Fig. 6 ist ersichtlich, dass die gesamte Anlage eingehaust ist (siehe Dach 21), so dass im Querschnitt, gemäß Fig. 6, eine geschlossene Kabine 30 geschaffen wird. Die zwei Führungsabschnitte 16, 17 sind von einer Schutzabdeckung 32 abgedeckt. Die Schutzabdeckung 32 reicht bis zur Drehachse 15, so dass aus darüber befindlichen Fahrzeugkarosserien 12 abtropfende Flüssigkeit auf die Schutzabdeckung 32 tropft und in das Behandlungsbecken zurücktropft odervorheraufgefangen wird.

Wie aus Fig. 6 ersichtlich, wird bei der Rückführung der Drehgestelle die Halterung 14 um 90° abgewinkelt, wodurch seitlich Platz gespart wird. Gleichzeitig sind die abgeklappten Halterungen 14 der Drehgestelle zusammen mit den Drehgestellen 13 auch bei der Rückführung unterhalb der Schutzabdeckung 32 vor Herabtropfen der Flüssigkeit geschützt.

Die gezeigte Anlage wird wie folgt betrieben. Vor der Behandlungsstation 1 werden die Fahrzeugkarosserien 12 über eine hier nicht dargestellte Beladevorrichtung auf ein bereitgestelltes leeres Drehgestell 13 überführt und dort mit Hilfe der Halterung 14 lösbar befestigt. Wie bereits zuvor erläutert, kann dies unmittelbar oder durch Zwischenschaltung eines sogenannten Skids erfolgen. Es wird nun das jeweilige Drehgestell 13 zur gewünschten Position über einem Behandlungsbecken 1 - 9 verfahren und dort durch Drehung der Drehachse um 180° die Fahrzeugkarosserie 12 in die jeweilige Behandlungsflüssigkeit in einem der Behandlungsbecken 1 - 9 eingetaucht. Durch entgegengesetzte Drehung erfolgt das Herausführen der Fahrzeugkarosserie 12.

Daraufhin wird mit beliebiger Geschwindigkeit das Drehgestell 13 zur nächsten gewünschten Behandlungsstation 1-9 weiterbewegt und dort wiederum die Karosserie 12 durch Drehung eingetaucht. Wird eine längere Verweilzeit gewünscht, so kann auch bei eingetauchter Karosserie 12 eine kontinuierliche Fortbewegung des Drehgestells 13 erfolgen. Am Ende der Reihe von Behandlungsstationen 1-9 wird die Fahrzeugkarosserie 12 von dem Drehgestell 13 abgenommen und das nun leere Drehgestell 13 im schnellen Rücklauf auf dem Abschnitt 17 der Führungseinrichtung wieder zur Beladevorrichtung zurückgeführt.

Für eine kürzere Abtropfzeit kann die Drehbewegung jederzeit unterbrochen werden, um die Fahrzeugkarosserie 12 in einem für den Abtropfvorgang günstigen Winkel zu halten; beispielsweise etwa 30° bis 70°.

Es ist selbstverständlich somit auch möglich, in einem langen Behandlungsbecken mehrere Fahrzeugkarosserien 12 gleichzeitig zu behandeln. Somit können auch lange Prozesszeiten in einem, lokal gesehen, quasi kontinuierlichen Prozessablauf realisiert werden. Wie bereits eingangs ausgeführt, können die Drehgestelle 13 separate Antriebe wie Elektromotoren für das Verfahren der Drehgestelle wie auch zur Durchführung der Drehbewegungen der Halterungen 14 aufweisen. Es sind aber auch mechanische Lösungen denkbar, bei denen sich die Drehgestelle 13 an ein stetig umlaufendes Seil oder eine umlaufende Kette ein- und auskoppeln lassen und dadurch fortbewegt werden. Im ausgekoppelten Zustand könnte die Seiloder Kettenbewegung als Antrieb für die Drehgestelle 13 verwendet werden.

Beispielsweise wäre es auch denkbar, eine Behandlungsstation vorzusehen, die keine Behandlungsflüssigkeit aufweist, sondern sogenannte Spritzringe. In dieser Behandlungsstation können dann die Fahrzeugkarosserien 12 durch eine oder mehrere Ein- und Ausdrehbewegungen hindurchbewegt werden, wodurch eine in gewünschter Weise teilweise oder vollständige Bespritzung mit der gewünschten Behandlungsflüssigkeit oder einer Farbe erfolgt.

Hier sind die Behandlungsstationen unterhalb der Führungseinrichtung 16, 17 angeordnet. Wenn keine Flüssigkeiten verwendet werden, können einzelne Behandlungsstationen aber auch oberhalb oder seitlich der Führungseinrichtung 16, 17 angeordnet sein, wie beispielsweise Spritzkabinen oder dergleichen.

## Patentansprüche

1. Anlage zur Oberflächenbehandlung von Werkstükken (12) wie beispielsweise Fahrzeugkarosserien, mit
- mehreren aufeinanderfolgenden Behandlungsstationen (1-9),
- einer Führungseinrichtung, die einen im Bereich der Behandlungsstationen (1-9) verlaufenden ersten Führungsabschnitt (16) aufweist, und
- mehreren auf der Führungseinrichtung (16, 17) individuell verfahrbaren Drehgestellen (13), wovon jedes mit einer Halterung (14) für wenigstens ein Werkstück (12) versehen ist und eine Drehachse (15) aufweist, die derartangeordnet ist, dass durch Drehung um 180° um die Drehachse (15) das Werkstück (12) in eine der Behandlungsstationen (1-9) ein- und ausbringbar ist; **dadurch gekennzeichnet, dass** die Drehgestelle (13) unabhängig voneinander jeweils in eine gewünschte Position bezüglich mehrerer aufeinanderfolgender Behandlungsstationen (1-9) verfahrbar sind.

2. Anlage nach Anspruch 1, **dadurch gekennzeichnet, dass** jedes Drehgestell (12) mit einem eigenen Antrieb zum Bewegen des Drehgestells (12) längs der Führungseinrichtung (16, 17) ausgestattet ist.

3. Anlage nach Anspruch 1 oder 2, **dadurch gekennzeichnet, dass** jedes Drehgestell (12) mit einem eigenen Antrieb zur Durchführung der Drehung um die Drehachse (14) ausgestattet ist.

4. Anlage nach Anspruch 1, **dadurch gekennzeichnet, dass** jedes Drehgestell (12) einen Antrieb aufweist, der über eine Umschalteinrichtung wahlweise zum Bewegen des Drehgestells (13) längs der Führungseinrichtung (16, 17) oder zur Durchführung der Drehung um die Drehachse (15) verwendbar ist.

5. Anlage nach einem der voranstehenden Ansprüche, **dadurch gekennzeichnet, dass** die Führungseinrichtung einen mit dem ersten Führungsabschnitt (16) eine geschlossene Schleife bildenden zweiten Führungsabschnitt (17) aufweist.

6. Anlage nach einem der voranstehenden Ansprüche, **dadurch gekennzeichnet, dass** die Führungseinrichtung als Schiene (16, 17) ausgebildet ist.

7. Anlage nach einem der voranstehenden Ansprüche, **dadurch gekennzeichnet, dass** jedes Drehgestell (13) einen mit der Drehachse (15) gekoppelten Hebelarm aufweist, der mit einer ortsfesten Hebelführung so zusammenwirkt, dass durch Längsverfahren des Drehgestells (13) in der Führungseinrichtung (16, 17) die Drehbewegung herbeigeführt wird.

8. Anlage nach einem der voranstehenden Ansprüche, **dadurch gekennzeichnet, dass** eine Zuführeinrichtung, mit der die Werkstücke (12) auf ein Drehgestell (13) aufbringbar sind, und eine Abnahmeeinrichtung vorhanden sind, mit der behandelte Werkstücke (12) von den Drehgestellen (13) abnehmbar sind.

9. Anlage nach einem der voranstehenden Ansprüche, **dadurch gekennzeichnet, dass** der zweite Führungsabschnitt (17) der Führungseinrichtung zur Rückführung der Drehgestelle (13) von einem Ausgangsbereich zu einem Eingangsbereich der Anlage oberhalb, unterhalb oder seitlich der Behandlungsstationen (1-9) verläuft.

10. Anlage nach einem der voranstehenden Ansprüche, **dadurch gekennzeichnet, dass** die Drehachsen (15) der Drehgestelle (13) parallel oder senkrecht zur Verfahrrichtung der Drehgestelle (13) angeordnet sind.

11. Anlage nach einem der voranstehenden Ansprüche, **dadurch gekennzeichnet, dass** die Drehgestelle (13) mit einem Energiespeicher ausgestattet sind, der die zum Antrieb der Drehgestelle (13) notwendige Energie speichert.

12. Verfahren zur Durchführung einer Oberflächenbehandlung an Werkstücken (12) wie beispielsweise Fahrzeugkarosserien, bei dem auf einer Führungseinrichtung (16, 17) verfahrbare Drehgestelle (13) mit jeweils einer Halterung (14) für wenigstens ein Werkstück (12) und einer Drehachse (15) unabhängig voneinander jeweils in eine gewünschte Position bezüglich mehrerer aufeinanderfolgender Behandlungsstationen (1-9) verfahren werden, und bei dem während der Fortbewegung oder nach Stillstand des Drehgestells (13) durch Drehung um 180° um die Drehachse (15) eines Drehgestells (13) das wenigstens eine darauf befindliche Werkstück (12) in eine Behandlungsstation (1-9) eingebracht wird bzw. aus dieser herausbefördert wird.

13. Verfahren nach Anspruch 12, **dadurch gekennzeichnet, dass** die Drehgestelle (13) auf der Führungseinrichtung (16, 17) mit unterschiedlichen Geschwindigkeiten verfahren werden.

14. Verfahren nach Anspruch 12 oder 13, **dadurch gekennzeichnet, dass** die mit Werkstücken beladenen Drehgestelle (13) oberhalb der Behandlungsstationen (1-9) mit einer niedrigeren Geschwindigkeit verfahren werden als bei der Rückführung von unbeladenen Drehgestellen (13) zu einer Beladestation.

15. Verfahren nach einem der Ansprüche 12-14, **dadurch gekennzeichnet, dass** die Drehgestelle (13) durch Eigenantriebe auf der Führungseinrichtung (16, 17) individuell verfahren werden.

## Claims

1. Plant for surface treatment of workpieces (12), such as vehicle bodies, for example, with
- several successive treatment stations (1-9),
- a guide device having a first guide section (16) running in the area of the treatment stations (1-9) and
- several bogies (13), individually movable on the guide device (16, 17), each of which is provided with a mount (14) for at least one workpiece (12) and a hinge pin (15) arranged in such a way that the workpiece (12) can be brought into and out of one of the treatment stations (1-9) by rotation through 180° about the hinge pin (15), **characterised in that** the bogies (13) independently of each other in each case are moved into a desired position in respect of several successive treatment stations (1-9).

2. Plant according to claim 1, **characterised in that** each workpiece (12) is fitted with its own drive for moving the bogie (13) along the guide device (16, 17).

3. Plant according to claim 1 or 2, **characterised in that** each bogie (13) is fitted with its own drive for carrying out the rotation about the hinge pin (14) *(sic).*

4. Plant according to claim 1, **characterised in that** each bogie (13) has a drive which can be used via a switchover device optionally for moving the bogie (13) along the guide device (16, 17) or for carrying out the rotation about the hinge pin (15).

5. Plant according to one of the preceding claims, **characterised in that** the guide device has a second guide section (17) forming a closed loop with the first guide section (16).

6. Plant according to one of the preceding claims, **characterised in that** the guide device is constructed as a rail (16, 17).

7. Plant according to one of the preceding claims, **characterised in that** each bogie (13) has a lever arm coupled to the hinge pin (15) which cooperates with a stationary lever guide in such a way that the rotational movement is produced by longitudinal movement of the bogie (13) in the guide device (16, 17).

8. Plant according to one of the preceding claims, **characterised in that** there are a feed device with which the workpiece (12) can be placed on to a bogie (13) and a removal device with which treated workpieces (12) can be removed from the bogies (13).

9. Plant according to one of the preceding claims, **characterised in that** the second guide section (17) of the guide device runs above, below or laterally of the treatment stations (1-9) for returning the bogies (13) from an exit area to an entry area of the plant.

10. Plant according to one of the preceding claims, **characterised in that** the hinge pins (15) of the bogies (13) are arranged parallel or perpendicular to the direction of movement of the bogies (13).

11. Plant according to one of the preceding claims, **characterised in that** the bogies (13) are fitted with an energy store which stores the energy necessary for driving the bogies (13).

12. Method for carrying out a surface treatment on workpieces (12), such as vehicle bodies, for example, in which bogies (13) movable on a guide device (16, 17) with in each case a mount (14) for at least one workpiece (12) and a hinge pin (15) are moved independently of one another in each case into a desired position in respect of several successive treatment stations (1-9) and in which the at least one workpiece located on the bogie (13) is brought into a treatment station (1-9) or conveyed out of it while the bogie is still moving or has come to a halt by rotation through 180° about the hinge pin (15) of a bogie (13).

13. Method according to claim 12, **characterised in that** the bogies (13) are moved on the guide device (16, 17) at different speeds.

14. Method according to claim 12 or 13, **characterised in that** the bogies (13) loaded with workpieces are moved above the treatment stations (1-9) at a lower speed than during return of unladen bogies (13) to a loading station.

15. Method according to one of claims 12 to 14, **characterised in that** the bogies (13) are driven on the guide device (16, 17) individually by their own drives.

## Revendications

1. Installation pour le traitement de surface de pièces d'oeuvre (12), telles que, par exemple, des carrosseries de véhicule, avec
- une pluralité de stations de traitement (1 à 9) se suivant les unes les autres,
- un dispositif de guidage, présentant un premier tronçon de guidage (16) s'étendant dans la zone des stations de traitement (1 à 9), et
- une pluralité de châssis tournants (13) déplaçables individuellement sur le dispositif de guidage (16, 17), dont chacun est muni d'une fixation (14), pour au moins une pièce d'oeuvre, et présente un axe de rotation (15) disposé de manière que, par une rotation de 180° autour de l'axe de rotation (15), la pièce d'oeuvre (12) soit susceptible d'être introduite dans, et extraite d'une des stations de traitement (1 à 9),
**caractérisée en ce que**
les châssis tournants (13) sont déplaçables indépendamment les uns des autres, chacun à une position souhaitée par rapport à une pluralité de stations de traitement (1 à 9) se suivant les unes les autres.

2. Installation selon la revendication 1, **caractérisée en ce que** chaque châssis tournant (12) est équipé d'un entraînement propre, pour assurer le déplacement du châssis tournant (12) le long du dispositif de guidage (16, 17).

3. Installation selon la revendication 1 ou 2, **caractérisée en ce que** chaque châssis tournant (12) est équipé d'un entraînement propre pour effectuer la rotation autour de l'axe de rotation (14).

4. Installation selon la revendication 1, **caractérisée en ce que** chaque châssis tournant (12) présente un entraînement, utilisable par l'intermédiaire d'un dispositif de commutation, au choix pour déplacer le châssis tournant (13) le long du dispositif de guidage (16, 17), ou pour effectuer la rotation autour de l'axe de rotation (15).

5. Installation selon l'une des revendications précédentes, **caractérisée en ce que** le dispositif de guidage présente un deuxième tronçon de guidage (17), formant une boucle fermée avec le premier tronçon de guidage (16).

6. Installation selon l'une des revendications précédentes, **caractérisée en ce que** le dispositif de guidage est réalisé sous la forme de glissière ou rail (16, 17).

7. Installation selon l'une des revendications précédentes, **caractérisée en ce que** chaque châssis tournant (13) présente un bras de levier, couplé à l'axe de rotation (15) et coopérant avec un guidage de levier localement fixe, de manière que le mouvement tournant soit provoqué par un déplacement longitudinal du châssis tournant (13) dans le dispositif de guidage (16, 17).

8. Installation selon l'une des revendications précédentes, **caractérisée en ce qu'**un dispositif d'alimentation, à l'aide duquel les pièces d'oeuvre (12) sont susceptibles d'être placées sur un châssis tournant (13), et un dispositif d'évacuation sont prévues, dispositif d'évacuation à l'aide duquel des pièces d'oeuvre (12) traitées sont susceptibles d'être prélevées des châssis tournants (13).

9. Installation selon l'une des revendications précédentes, **caractérisée en ce que** le deuxième tronçon de guidage (17) du dispositif de guidage, pour assurer le retour des châssis tournants (13) d'une zone de sortie à une zone d'entrée de l'installation, s'étend au-dessus, ou au-dessous, ou à côté des stations de traitement (1 à 9).

10. Installation selon l'une des revendications précédentes, **caractérisée en ce que** les axes de rotation (15) du châssis tournant (13) sont disposés parallèlement ou perpendiculairement par rapport à la direction de déplacement des châssis tournants (13).

11. Installation selon l'une des revendications précédentes, **caractérisée en ce que** les châssis tournants (13) sont équipés d'un accumulateur d'énergie stockant l'énergie nécessaire pour l'entraînement des châssis tournants (13).

12. Procédé de mise en oeuvre d'un traitement de surface sur des pièces d'oeuvre (12), telles que, par exemple, des carrosseries de véhicule, pour lequel des châssis tournants (13), déplaçables sur un dispositif de guidage (16, 17), ayant chacun une fixation (14), pour au moins une pièce d'oeuvre (12), et un axe de rotation (15) sont déplacés indépendamment les uns des autres, chaque fois en une position souhaitée par rapport à une pluralité de stations de traitement (1 à 9) se suivant les unes les autres, et procédé pour lequel, pendant la continuation du déplacement ou après mise à l'arrêt du châssis tournant (13), par une rotation de 180° autour de l'axe de rotation (15) d'un châssis tournant (13), la au moins une pièce d'oeuvre (12) se trouvant sur lui est introduite dans, ou sortie d'une station de traitement (1 à 9).

13. Procédé selon la revendication 12, **caractérisé en ce que** les châssis tournants (13) sont déplacés sur le dispositif de guidage (16, 17) à des vitesses différentes.

14. Procédé selon la revendication 12 ou 13, **caractérisé en ce que** les châssis tournants (13), chargé avec des pièces d'oeuvre, sont déplacés au-dessus des stations de traitement (1 à 9), à une vitesse inférieure à la vitesse d'évolution lors du retour, à une station de chargement, de châssis tournants (13) déchargés.

15. Procédé selon l'une des revendications 12 à 14, **caractérisé en ce que** les châssis tournants (13) sont déplacés individuellement sur le dispositif de guidage (16, 17) à l'aide d'entraînements propres.
